# EUROPÄISCHE PATENTSCHRIFT

(11) **EP 0 405 181 B1**
(45) Veröffentlichungstag und Bekanntmachung des Hinweises auf die Patenterteilung: **12.10.1994**
(21) Anmeldenummer: 90110482.8
(22) Anmeldetag: 01.06.1990
(51) Int. Cl.: H01G 9/02

(54) **Elektrolytkondensator**
Electrolytic capacitor
Condensateur électrolytique

(30) Priorität: 29.06.1989 EP 89111872
(43) Veröffentlichungstag der Anmeldung: 02.01.1991
(73) Patentinhaber: SIEMENS AKTIENGESELLSCHAFT, 80333 München (DE)
(72) Erfinder: Behrend, Günter, Dr., Dipl.-Chem., D-7922 Anhausen (DE)

(56) Entgegenhaltungen:
- US-A- 4 734 821

## Beschreibung

Die Erfindung betrifft einen Elektrolytkondensator.

Derartige Kondensatoren bestehen beispielsweise aus zumindest zwei miteinander verwickelten Folien aus einem Ventilmetall (z. B. Aluminium). Die als Anode dienende Folie ist mit einer als Dielektrikum wirkenden Oxidschicht versehen, die in einem elektrochemischen Prozeß auf die Folie aufgebracht wird. Vor Herstellung der Oxidschicht kann die Folie, ebenfalls in einem elektrochemischen Verfahren, zur Kapazitätserhöhung aufgerauht werden. Zwischen Anoden- und Kathodenfolie sind Abstandshalter angeordnet, die mit einem Betriebselektrolyt getränkt sind.

Werden derartige Kondensatoren beispielsweise in Schaltnetzteilen als Niederspannungs-Elektrolytkondensatoren betrieben, müssen sie besonders niedrige Ersatzserienwiderstände (ESR) aufweisen. Hierbei ist der Ersatzserienwiderstand der ohmsche Anteil in der Ersatzserienschaltung. Zur Einhaltung niedriger ESR-Werte ist eine hohe Leitfähigkeit des Betriebselektrolyten eine wichtige Voraussetzung. Außerdem muß der Elektrolyt so aufgebaut sein, daß ein Dauerbetrieb bei ≧ 105°C möglich ist. Der aus US-A-4 734 821 bekannte Betriebselektrolyt enthält Tetraethylammonium maleat, Maleinsäure, γ-Butyrolacton, Ethylenglykol und Wasser.

Sehr hohe Leitfähigkeiten bis zu 15 mS/cm (30°C) erreicht man z.B. mit Ammoniumsalzen mehrwertiger organischer Säuren in Ethylenglycol-Wasser-Gemischen. Der Wasseranteil dieser Elektrolyte ist aber so hoch, daß die Kondensatoren bereits bei Betriebstemperaturen > 85°C durch Korrosion ausfallen.

Es sind aber auch derart hohe Leitfähigkeiten einstellbar, wenn als Lösungsmittel Amide kurzkettiger einwertiger Säuren verwendet werden. Hierbei kann auf Wasser ganz oder teilweise verzichtet werden. Hauptbeispiele für solche Säureamide sind N, N-Dimethylformamid (DMF) und N, N-Dimethylacetamid (DMAC).

Hierbei ist jedoch zu berücksichtigen, daß die meisten Säureamide gesundheitsschädliche Gefahrstoffe sind. So betragen die MAK (maximale Arbeitsplatzkonzentration)-Zahlen für DMF bzw. DMAC nur 20 bzw. 10 ppm. Außerdem stehen DMF und DMAC im Verdacht, cancerogen und teratogen zu sein.

Aufgabe der Erfindung ist es daher, einen Elektrolytkondensator anzugeben, dessen Elektrolyt bei hoher Leitfähigkeit und hoher Temperaturstabilität bis 125°C keine gesundheitsgefährdenden Stoffe enthält und bei dem der Elektrolyt weiterhin zu keiner nennenswerten Korrosion im Kondensator führt.

Diese Aufgabe wird erfindungsgemäß durch einen Elektrolytkondensator mit den in Anspruch 1 genannten Merkmalen gelöst. Er besteht aus zumindest zwei miteinander verwickelten Folien aus Aluminium, von denen die als Anode dienende Folie mit einer als Dielektrikum wirkenden Oxidschicht versehen ist und bei dem zwischen Anoden- und Kathodenfolie Abstandshalter angeordnet sind, die mit einem Betriebselektrolyt getränkt sind, der aus Tetraethylammonium hydrogen maleat mit einem Zusatz von Maleinsäure und γ-Butyrolacton als Lösungsmittel besteht.

Der Elektrolyt besitzt einen pH-Wert von 5 bis 7.

Für das als Lösungsmittel verwendete γ-Butyrolacton (BLO) sind keine MAK-Werte genannt, so daß der Elektrolytkondensator gemäß der Erfindung keine gesundheitsgefährdenden Stoffe enthält.

Es sind zwar aus der EP 0 227 433 A2 sowie der EP 0 263 182 A1 Elektrolytkondensatoren bekannt, bei denen der Betriebselektrolyt aus in Butyrolacton gelöstem Tetraethylammoniumhydrogenmaleat besteht. Bei diesen bekannten Elektrolyten ist jedoch zu berücksichtigen, daß derartige Lösungen wegen der Solvolyse durch Butyrolacton einen pH-Wert von 10 bis 12 annehmen. Selbst wenn der Neutralpunkt des BLO bei pH = 8 liegt, bedeutet dies ein stark basisches Medium, in dem Aluminium und Aluminiumoxid thermodynamisch instabil sind.

Erst durch einen Zusatz der salzbildenden Carboxylsäure - bei Tetraethylammoniumhydrogenmaleat, also der Maleinsäure - gelingt es, den pH-Wert in den Bereich von pH = 5 bis 7 zu korrigieren, so daß diese Elektrolyte nicht mehr korrodierend wirken. Dies ist dem bekannten Stand der Technik nicht zu entnehmen, vielmehr sind dort beispielsweise weitere Zusätze bis zu 10 % Wasser (EP 0 263 182) bzw. Phosphorsäure, Nitrobenzol oder Borsäure (EP 0 227 433) vorgeschlagen.

Hierbei ist jedoch zu berücksichtigen, daß bereits geringste Zusätze an Phosphor- bzw. Borsäure bei 30°C unlöslich sind. Nach Auflösen bei 90 bis 100°C kristallisieren die Zusätze beim Abkühlen wieder aus. Die Zugabe von Wasser destabilisiert das System Tetraethylammoniumhydrogenmaleat-Butyrolacton, so daß bei Zugabe von 1 Mol Wasser je kg Elektrolyt ein Leitfähigkeitsabbau um 13 % nach 1000 h bei 125°C eintritt, wogegen der Elektrolyt ohne Wasserzugabe nur eine Einbuße der Leitfähigkeit von 4 % aufweist. Bei Zugabe von 2 Mol Wasser je kg Elektrolyt (= 3,6 Gew%) ist ein gleich großer Verlust bereits nach 65 h erreicht.

Im Gegensatz zu den quaternären Ammoniumsalzen der Maleinsäure sind Trialkylammoniumsalze der Maleinsäure thermisch instabil. Ihre Butyrolacton-Lösungen haben bei 125°C bereits nach 250 h 50 % ihrer Leitfähigkeit verloren, hauptsächlich durch Umwandlung der Maleinsäure in die isomere Fumarsäure.

Elektrolyte, die einen Leitfähigkeitsbereich von 6 bis 15 mS/cm abdecken, weisen eine Konzentration von Tetraethylammoniumhydrogenmaleat von 0,25 bis 0,8 Mol je kg Elektrolyt auf. Zur pH-Korrektur sind im allgemeinen Zusätze von 2 % Maleinsäure (bezogen auf den Anteil an Tetraethylammoniumhydrogenmaleat) ausreichend, so daß sich 0,005 bis 0,16 Mol je kg Elektrolyt ergeben. Als Lösungsmittel dient γ-Butyrolacton.

Wichtig ist, daß die Elektrolyte keine weiteren Bestandteile, insbesondere Wasserzugaben, enthalten.

Die Durchschlagspannungen der oben angeführten Lösungen betragen 50 bis 90 V (85°C), womit eine maximale Kondensatornennspannung von 63 V möglich ist.

Durch geringfügige Abwandlungen können auch Elektrolyte mit niedrigerer Leitfähigkeit und damit höherer Durchschlagspannung erhalten werden.

## Patentansprüche

1. Elektrolytkondensator, der aus zumindest zwei miteinander verwickelten Aluminiumfolien besteht, die als Anoden- und Kathodenfolie dienen und von denen die als Anode dienende Folie mit einer als Dielektrikum wirkenden Oxidschicht versehen ist, bei dem zwischen Anoden- und Kathodenfolie Abstandshalter angeordnet sind, die mit einem Betriebselektrolyt getränkt sind, der aus Tetraethylammoniumhydrogenmaleat mit einem Zusatz von Maleinsäure und γ-Butyrolacton als Lösungsmittel besteht, der einen pH-Wert von 5 bis 7 besitzt und eine Zusammensetzung aus 0,25 bis 0,8 Mol Tetraethylammoniumhydrogenmaleat je kg Elektrolyt, 0,005 bis 0,016 Mol Maleinsäure je kg Elektrolyt und γ-Butyrolacton besitzt.

## Claims

1. Electrolytic capacitor composed of at least two aluminium foils wound together with one another, which serve as the anode and the cathode foil and of which the foil serving as the anode is provided with an oxide layer acting as a dielectric, in which capacitor spacers are arranged between the anode and the cathode foil, which are impregnated with an operating electrolyte which is composed of tetraethylammonium hydrogen maleate, with an addition of maleic acid and γ-butyrolactone as the solvent, has a PH of 5 to 7 and has a composition of 0.25 to 0.8 mol of tetraethylammonium hydrogen maleate per kg of electrolyte, from 0.005 to 0.016 mol of maleic acid per kg of electrolyte and γ-butyrolactone.

## Revendications

1. Condensateur électrolytique constitué d'au moins deux feuilles d'aluminium enroulées l'une dans l'autre, qui sont utilisées en tant que feuille d'anode et feuille de cathode et parmi lesquelles la feuille utilisée comme anode comporte une couche d'oxyde agissant en tant que diélectrique, et dans lequel entre la feuille d'anode et la feuille de cathode sont disposées des intercalaires, qui sont imprégnés d'un électrolyte de fonctionnement constitué d'hydrogénomaléate de tétraéthylammonium additonné d'acide maléique, de γ-butyrolactone en tant que solvant et qui a un pH compris entre 5 et 7 et a une composition comprenant 0,25 à 0,8 mole d' hydrogénomaléate de tétraéthylammonium par kg d'électrolyte, 0,005 à 0,016 mole d'acide maléique par kg d'électrolyte et de la γ-butyrolactone.
